# EUROPEAN PATENT APPLICATION

(11) **EP 4 823 048 A1**
(43) Date of publication of application: **14.10.2026**
(21) Application number: 24910625.3
(22) Date of filing: 06.12.2024
(51) Int. Cl.: H04L 27/26

(54) **WIRELESS COMMUNICATION METHOD AND APPARATUS**

(30) Priority: 27.12.2023 CN 202311820351
(71) Applicant: Huawei Technologies Co., Ltd., Shenzhen, Guangdong 518129 (CN)
(72) Inventor: YUAN, Shitong, Shenzhen, Guangdong 518129 (CN); LIU, Fengwei, Shenzhen, Guangdong 518129 (CN)
(74) Representative: Isarpatent
(86) International application number: PCT/CN2024/137262
(87) International publication number: WO 2025/139693

(57) **Abstract**

This application provides a wireless communication method and apparatus. The method includes: A network device configures a related parameter set or schedules a special resource to indicate a terminal device; and the terminal device generates, based on a method indicated by the network device and the parameter set, a single-carrier signal in a pure time domain signal processing manner. The single-carrier signal generated by using the method and the apparatus in embodiments of this application has a low PAPR, transmitter complexity is reduced, and the single-carrier signal can share a receiver with a multi-carrier signal.

## Description

This application claims priority to Chinese Patent Application No. 202311820351.2, filed with the China National Intellectual Property Administration on December 27, 2023, and entitled "WIRELESS COMMUNICATION METHOD AND APPARATUS", which is incorporated herein by reference in its entirety.

### TECHNICAL FIELD

Embodiments of this application relate to the field of wireless communication technologies, and more specifically, to a communication method and apparatus.

### BACKGROUND

Orthogonal frequency division multiplexing (orthogonal frequency division multiplexing, OFDM) is a widely used waveform in various communication systems. However, OFDM suffers from a high peak-to-average power ratio (peak-to-average power ratio, PAPR). Compared with OFDM, discrete Fourier transform-spread orthogonal frequency division multiplexing (DFT spread OFDM, DFT-s-OFDM) provides a lower PAPR, but at a cost of higher complexity. Single-carrier QAM (single carrier-QAM, SC-QAM) and single-carrier FDE (single carrier-FDE, SC-FDE) are conventional single-carrier waveforms. Single-carrier waveforms offer a lower PAPR and lower transmitter complexity. In addition, for high-frequency and large-bandwidth scenarios, SC-QAM and SC-FDE have greater advantages than DFT-s-OFDM. However, SC-QAM and SC-FDE are incompatible with existing NR protocols. Moreover, in conventional systems, coexistence of single-carrier and multi-carrier waveforms is not well supported, and separate receivers need to be designed for the two types of waveforms to receive respective signals, resulting in excessively high costs.

Therefore, a solution is urgently needed to enable receiver sharing between single-carrier and multi-carrier waveforms in a wireless communication system in which single-carrier and multi-carrier waveforms coexist, while reducing signal generation complexity and achieving a low PAPR for a generated single-carrier waveform by transmitting a single-carrier signal at a transmitter, and remaining compatible with existing protocols.

### SUMMARY

This application provides a wireless communication method and apparatus to enable a terminal device to generate a single-carrier signal with a low PAPR. This is less complex than generating a multi-carrier signal, and the single-carrier signal can share a receiver with the multi-carrier signal.

According to a first aspect, a wireless communication method is provided. The method may be performed by a terminal device, or may be performed by a chip or a circuit in the terminal device. This is not limited in this application. For ease of description, an example in which the method is performed by the terminal device is used below for description.

The method includes: generating a single-carrier signal based on a parameter set and a to-be-sent bit stream, where the parameter set includes one or more of the following: a configuration index, a quantity of physical resource blocks (physical resource blocks, PRBs), a quantity of resource elements (resource elements, REs), a system bandwidth, a roll-off factor, a quantity of fast Fourier transform (fast Fourier transform, FFT) points, a system cyclic prefix (cyclic prefix, CP) length, a CP length in a symbol, a symbol rate, an upsampling factor, and a downsampling factor; and
sending the single-carrier signal.

With reference to the first aspect, in some implementations of the first aspect, generating the single-carrier signal based on the parameter set and the to-be-sent bit stream includes: modulating the to-be-sent bit stream to obtain a first signal; adding a CP to the first signal to obtain a second signal; upsampling the second signal to obtain a third signal; performing pulse shaping on the third signal to obtain a fourth signal; and downsampling the fourth signal to obtain the single-carrier signal.

Based on the foregoing solution, the terminal device generates a single-carrier signal, based on the obtained parameter set, thereby reducing complexity of generating a single-carrier signal. The generated single-carrier signal has a low PAPR, and the single-carrier signal can share a receiver with a multi-carrier signal. This reduces resource waste and improves communication efficiency.

With reference to the first aspect, in some implementations of the first aspect, when the upsampling factor is 1, it is an optional step to upsample the second signal to obtain the third signal; and when the downsampling factor is 1, it is an optional step to downsample the fourth signal to obtain the single-carrier signal.

Based on the foregoing solution, a process of generating a single-carrier signal is simplified to some extent, and complexity is reduced.

With reference to the first aspect, in some implementations of the first aspect, generating the single-carrier signal based on the parameter set and the to-be-sent bit stream includes: modulating the to-be-sent bit stream to obtain a first signal; upsampling the first signal to obtain a second signal; performing pulse shaping on the second signal to obtain a third signal; performing folding and addition on the third signal to obtain a fourth signal; downsampling the fourth signal to obtain a fifth signal; and adding a CP to the fifth signal to obtain the single-carrier signal.

Based on the foregoing solution, the terminal device generates a single-carrier signal based on the obtained parameter set, thereby reducing complexity of generating a single-carrier signal. The generated single-carrier signal has a low PAPR, and the single-carrier signal can share a receiver with a multi-carrier signal. This reduces resource waste and improves communication efficiency.

With reference to the first aspect, in some implementations of the first aspect, when the upsampling factor is 1, it is an optional step to upsample the first signal to obtain the second signal; and when the downsampling factor is 1, it is an optional step to downsample the fourth signal to obtain the fifth signal.

Based on the foregoing solution, a process of generating a single-carrier signal is simplified to some extent, and complexity of generating the single-carrier signal is further reduced.

With reference to the first aspect, in some implementations of the first aspect, the parameter set further includes a parameter of a filter, for example, a quantity of taps of a time-domain filter or a response array of a time-domain filter; and the parameter of the filter is used for a pulse shaping phase.

Based on the foregoing solution, the terminal device generates a single-carrier signal based on the obtained parameter set, thereby reducing complexity of generating a single-carrier signal. The generated single-carrier signal has a low PAPR, and the single-carrier signal can share a receiver with a conventional multi-carrier signal, for example, OFDM. This reduces resource waste and improves communication efficiency.

With reference to the first aspect, in some implementations of the first aspect, when a sampling manner in a modulation phase is pure real-valued modulation and π/2 phase rotation, the terminal device considers that the roll-off factor is 1 by default.

With reference to the first aspect, in some implementations of the first aspect, the terminal device receives indication information. The indication information indicates the terminal device to generate the single-carrier signal.

Indication information indicating that transform precoding is enabled may be configured by the network device by using higher layer signaling radio resource control (radio resource control, RRC), or by using downlink control information (downlink control information, DCI). This is not limited herein.

In a possible implementation, the indication information indicates that transform precoding is enabled (transform precoding enabled), to generate the single-carrier signal based on the obtained parameter set.

In another possible implementation, the indication information may be predefined in a protocol, and may be referred to as a switch or a flag. A specific name and form of the indication information is not limited in embodiments of this application.

Based on the foregoing solution, the terminal device generates a single-carrier signal based on the obtained indication information and the parameter set. The generated single-carrier signal has a low PAPR, and the single-carrier signal can share a receiver with a multi-carrier signal. This reduces resource waste and improves communication efficiency.

With reference to the first aspect, in some implementations of the first aspect, in the pulse shaping phase, a parameter, the roll-off factor, in the phase may be directly configured by the network device in the parameter set.

In another possible implementation, if the parameter set does not include the roll-off factor, the roll-off factor may be determined by the terminal device based on at least one of the following manners:
(1) determined based on the quantity of PRBs and the symbol rate in the parameter set;
(2) determined based on the quantity of REs and the symbol rate in the parameter set; or
(3) determined based on the system bandwidth and the symbol rate in the parameter set.

Based on the foregoing solution, the terminal device generates a single-carrier signal based on the obtained parameter set, thereby reducing complexity of generating a single-carrier signal. A signal with a low PAPR is generated based on different parameter combinations configured by the network device. In addition, the single-carrier signal can share a receiver with a multi-carrier signal. This makes the process of generating a single-carrier signal more flexible while reducing resource waste and improving communication efficiency.

With reference to the first aspect, in some implementations of the first aspect, in a CP addition phase, a parameter, the CP length in a symbol in the phase, may be directly configured by the network device in the parameter set.

In another possible implementation, if the parameter set does not include the CP length in a symbol, the CP length in a symbol may be determined by the terminal device based on the quantity of FFT points, the system CP length, the upsampling factor, and the downsampling factor in the parameter set.

Based on the foregoing solution, the terminal device generates a single-carrier signal based on the obtained parameter set, thereby reducing complexity of generating a single-carrier signal. A signal with a low PAPR is generated based on different parameter combinations configured by the network device. In addition, the single-carrier signal can share a receiver with a multi-carrier signal. This makes the process of generating a single-carrier signal more flexible while reducing resource waste and improving communication efficiency.

With reference to the first aspect, in some implementations of the first aspect, the parameter set may further include FDRA. The quantity of FFT points may be determined based on the FDRA value, or a size of a scheduling bandwidth is determined based on the FDRA value, or a quantity of scheduled to-be-transmitted symbols is determined based on the FDRA value. In other words:
(1) the quantity of FFT points is determined based on the FDRA value; or
(2) the quantity of PRBs is determined based on the FDRA value; or
(3) the number of REs is determined based on the FDRA value.

In a possible implementation, if the quantity of PRBs indicated by the network device through FDRA scheduling is greater than or equal to a maximum quantity of PRBs in a current system, the terminal device determines the quantity of FFT points accordingly.

With reference to the first aspect, in some implementations of the first aspect, the terminal device receives a specific value predefined in a protocol, and the terminal device adjusts a signal generation process.

In a possible implementation, the quantity of PRBs received by the terminal device is a specific value predefined in a protocol, and the specific value indicates to perform a padding (padding) operation before the CP addition phase.

In a possible implementation, 0 or a random modulation symbol is added to a signal to complete the padding operation.

In another possible implementation, a modulation symbol carrying to-be-sent information is added to the signal to complete the padding operation.

In a possible implementation, when the quantity of PRBs is a specific value predefined in a protocol, both the upsampling factor and the downsampling factor are 1 by default.

Based on the foregoing solution, for a specific parameter predefined in a protocol, the terminal device adjusts the signal generation process, to further optimize the process of generating a single-carrier signal. In this way, a single-carrier signal with a low PAPR is generated, and the single-carrier signal can share a receiver with a multi-carrier signal.

With reference to the first aspect, in some implementations of the first aspect, the configuration index in the parameter set is used to identify different parameter sets.

In another possible implementation, the terminal device directly receives the parameter set. In other words, the terminal device does not need to receive the parameter set by using the configuration index.

Based on the foregoing solution, the terminal device may receive, by using two methods: receiving the configuration index and directly receiving the parameter set, the parameter required for generating the single-carrier signal. This makes a communication manner more flexible.

With reference to the first aspect, in some implementations of the first aspect, the parameter set is configured by an access network device; or the parameter set is predefined in a protocol.

Based on the foregoing solution, a plurality of options are provided for a specific source of the parameter set. This make the communication manner more flexible.

According to a second aspect, a wireless communication method is provided. The method may be performed by a network device, or may be performed by a chip or a circuit in the network device. This is not limited in this application. For ease of description, an example in which the method is performed by the network device is used below for description.

The method includes: sending first indication information, where the first indication information indicates that transform precoding is enabled; sending second indication information, where the second indication information indicates a terminal device to generate a single-carrier signal; and receiving the single-carrier signal by using a multi-carrier receiver, where the single-carrier signal is generated based on the second indication information.

With reference to the second aspect, in some implementations of the second aspect, the network device sends the first indication information to indicate that transform precoding is enabled, to indicate, in combination with the sent second indication information, the terminal device to generate the single-carrier signal.

It should be understood that the first indication information indicating that transform precoding is enabled may be configured by the network device by using RRC, or may be indicated by using DCI signaling. This is not limited.

With reference to the second aspect, in some implementations of the second aspect, the second indication information includes a parameter set, and the parameter set includes one or more of the following: a configuration index, a quantity of PRBs, a quantity of REs, a system bandwidth, a roll-off factor, a quantity of FFT points, a system CP length, a CP length in a symbol, a symbol rate, an upsampling factor, and a downsampling factor. The single-carrier signal is generated based on the parameter set.

Based on the foregoing solution, the network device indicates the terminal device to generate a single-carrier signal with a low PAPR. Complexity of generating a single-carrier signal is reduced, and the single-carrier signal can share a receiver with a multi-carrier signal. This reduces resource waste and improves communication efficiency.

With reference to the second aspect, in some implementations of the second aspect, the CP length in a symbol in the parameter set is determined based on the quantity of FFT points, the system CP length, the upsampling factor, and the downsampling factor.

Based on the foregoing solution, the network device indicates the terminal device to generate a single-carrier signal with a low PAPR. Complexity of generating a single-carrier signal is reduced, and the single-carrier signal can share a receiver with a multi-carrier signal. This reduces resource waste and improves communication efficiency.

With reference to the second aspect, in some implementations of the second aspect, the roll-off factor in the parameter set may be determined based on at least one of the following manners:
(1) determined based on the quantity of PRBs and the symbol rate in the parameter set;
(2) determined based on the quantity of REs and the symbol rate in the parameter set;
(3) determined based on the system bandwidth and the symbol rate in the parameter set;
(4) configured by the network device by using RRC or by using DCI, where a specific configuration manner is not limited in embodiments of this application; or
(5) predefined by the protocol.

Based on the foregoing solution, the terminal device generates a single-carrier signal based on the obtained parameter set, thereby reducing complexity of generating a single-carrier signal. The generated single-carrier signal has a low PAPR, and the single-carrier signal can share a receiver with a multi-carrier signal. This reduces resource waste and improves communication efficiency. In addition, a specific parameter is determined in different manners. This makes a signal generation process more flexible.

With reference to the second aspect, in some implementations of the second aspect, the parameter set further includes a parameter of a filter, for example, a quantity of taps of a time domain filter.

In a possible implementation, the parameter of the filter is determined based on the roll-off factor.

With reference to the second aspect, in some implementations of the second aspect, the parameter set further includes FDRA. The FDRA value is used to determine the quantity of FFT points, or a size of a scheduling bandwidth is determined based on the FDRA value, or a quantity of scheduled to-be-transmitted symbols is determined based on the FDRA value.

In a possible implementation, if the quantity of PRBs indicated by the network device through FDRA scheduling is greater than or equal to a maximum quantity of PRBs in a current system, the terminal device determines the quantity of FFT points accordingly.

With reference to the second aspect, in some implementations of the second aspect, the second indication information includes a transmission bandwidth predefined in a protocol. After indicating that transform precoding is enabled, the network device indicates, by scheduling a special bandwidth resource, the terminal device to process a signal, so that the terminal device generates a single-carrier signal with a low PAPR, and the single-carrier signal can share a receiver with a multi-carrier signal. This reduces resource waste and improves communication efficiency.

In a possible implementation, the quantity of PRBs received by the terminal device is a specific value predefined in a protocol, and in combination with the received indication information indicating that transform precoding is enabled, the terminal device sends the single-carrier signal in a pure time-domain signal generation manner by default.

In a possible implementation, when the quantity of PRBs is a specific value predefined in a protocol, both the upsampling factor and the downsampling factor are 1 by default.

Based on the foregoing solution, by using an explicit indication method and an implicit indication method, the terminal device generates a single-carrier signal with a low PAPR in a pure time-domain processing manner. This makes a communication manner more flexible.

According to a third aspect, a communication apparatus is provided. The apparatus includes a processor, a memory, and a transceiver. The memory is configured to store a computer program. The at least one processor is configured to: execute the computer program or instructions stored in the memory, and control the transceiver to receive and send a signal, so that when running, the communication apparatus can perform the method according to any implementation of the first aspect.

In a possible implementation, a structure of the communication apparatus may include a processing unit and a transceiver unit. The processing unit is configured to support the communication apparatus in performing a corresponding function in the foregoing method. The transceiver unit is configured to support communication between the communication apparatus and another communication apparatus, so that when running, the communication apparatus can perform the method according to any implementation of the first aspect. The communication apparatus may further include a storage unit. The storage unit is configured to be coupled to the processing unit and the transceiver unit, and stores program instructions and data that are necessary for the communication apparatus, so that when running, the communication apparatus can perform the method according to any implementation of the first aspect.

In a possible implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system, so that when running, the communication apparatus can perform the method according to any implementation of the first aspect.

According to a fourth aspect, a communication apparatus is provided. The apparatus includes a processor, a memory, and a transceiver. The memory is configured to store a computer program. The at least one processor is configured to: execute the computer program or instructions stored in the memory, and control the transceiver to receive and send a signal, so that when running, the communication apparatus can perform the method according to any implementation of the second aspect.

In a possible implementation, a structure of the communication apparatus may include a processing unit and a transceiver unit. The processing unit is configured to support the communication apparatus in performing a corresponding function in the foregoing method. The transceiver unit is configured to support communication between the communication apparatus and another communication apparatus, so that when running, the communication apparatus can perform the method according to any implementation of the second aspect. The communication apparatus may further include a storage unit. The storage unit is configured to be coupled to the processing unit and the transceiver unit, and stores program instructions and data that are necessary for the communication apparatus, so that when running, the communication apparatus can perform the method according to any implementation of the second aspect.

In a possible implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system, so that when running, the communication apparatus can perform the method according to any implementation of the second aspect.

According to a fifth aspect, a processor is provided, including a processor. The processor is configured to read and execute a computer program stored in a memory, to perform the method in any possible implementation of the first aspect and the second aspect.

For example, the communication apparatus may be a chip or a chip system.

Optionally, the chip further includes the memory, and the memory is connected to the processor through a circuit or a wire. The memory may store a computer program or instructions necessary for implementing any method according to the first aspect and the second aspect.

Further, optionally, the chip further includes a communication interface.

Unless otherwise specified, operations such as transmission, sending, and receiving related to the processor may be more generally understood as operations such as output, receiving, and input of the processor if the operations do not conflict with actual functions or internal logic of the operations in related descriptions, instead of operations such as transmitting, sending, and receiving directly performed by a radio frequency circuit and an antenna.

According to a sixth aspect, a communication system is provided. The communication system includes the communication apparatus according to the third aspect and/or the communication apparatus according to the fourth aspect.

According to a seventh aspect, a computer-readable storage medium is provided. The computer-readable storage medium stores program code to be executed by a device, and the program code is used to perform the method according to any implementation of the first aspect and the second aspect.

According to an eighth aspect, a chip system is provided. The chip system includes a processor and an interface. The interface is configured to obtain a program or instructions. The processor is configured to invoke the program or the instructions to implement or support the method according to any implementation of the first aspect and the second aspect.

In a possible design, the chip system further includes a memory. The memory is configured to store program instructions and data that are necessary for a terminal. The chip system may include a chip, or may include a chip and another discrete component.

According to a ninth aspect, a computer program product is provided. The computer program product includes computer program code, and when the computer program code is run on a computer, the method in any possible implementation of the first aspect and the second aspect is performed.

### BRIEF DESCRIPTION OF DRAWINGS

FIG. 1 is a diagram of a wireless communication system 100 to which an embodiment of this application is applicable;
FIG. 2 is a schematic flowchart of a modem module 200;
FIG. 3A and FIG. 3B are diagrams of processing procedures of a transmitter and a receiver of SC-QAM;
FIG. 4A and FIG. 4B are diagrams of processing procedures of a transmitter and a receiver of SC-FDE;
FIG. 5 is a schematic flowchart of a communication method 500 according to an embodiment of this application;
FIG. 6 is a flowchart of a method 600 for generating a single-carrier signal according to an embodiment of this application;
FIG. 7 is an example diagram of a modulation method 700 according to an embodiment of this application;
FIG. 8 is a flowchart of a method 800 for generating a single-carrier signal according to an embodiment of this application;
FIG. 9 is an example diagram of a convolution principle 900 applied to a method according to an embodiment of this application;
FIG. 10 is a block diagram of a communication apparatus 1000 according to an embodiment of this application; and
FIG. 11 is a block diagram of a communication apparatus 1100 according to an embodiment of this application.

### DESCRIPTION OF EMBODIMENTS

The following describes technical solutions of this application with reference to accompanying drawings.

The technical solutions provided in embodiments of this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

A device in the communication system may send a signal to another device or receive a signal from another device. The signal may include information, signaling, data, and the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, the terminal may be, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a wearable device, a terminal device in a 5G network, a terminal device in a future evolved public land mobile communication network (public land mobile network, PLMN), or the like. This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without relying on smartphones, such as smart watches or smart glasses, and devices that focus only one type of application function and need to work with other devices such as smartphones, such as various smart bands or smart jewelry for monitoring physical signs.

In embodiments of this application, an apparatus configured to implement a function of a terminal device, namely, a terminal apparatus, may be a terminal device, or may be an apparatus that can support a terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or may alternatively be the following names, such as a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, or M2M communication, a network-side device in a future communication network, a device that bears a base station function in a future communication system, or the like. The base station may support networks using a same access technology or different access technologies. A specific technology and a specific device form that are used by the network device are not limited in embodiments of this application.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

In different systems, the CU (or the CU-CP and the CU-UP), the DU, or the RU may alternatively have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP or the CU-UP), the DU, and the RU in this application may be implemented by using a software module, a hardware module, or a combination of a software module and a hardware module.

In embodiments of this application, an apparatus configured to implement a function of a network device may be a network device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

During actual application, the wireless communication system may include a plurality of network devices, and may also include a plurality of terminal devices. This is not limited. One network device may simultaneously perform downlink data transmission with one or more terminal devices. One terminal device may also simultaneously perform uplink data transmission with one or more network devices. Quantities of terminal devices and network devices included in the wireless communication system are not limited in embodiments of this application.

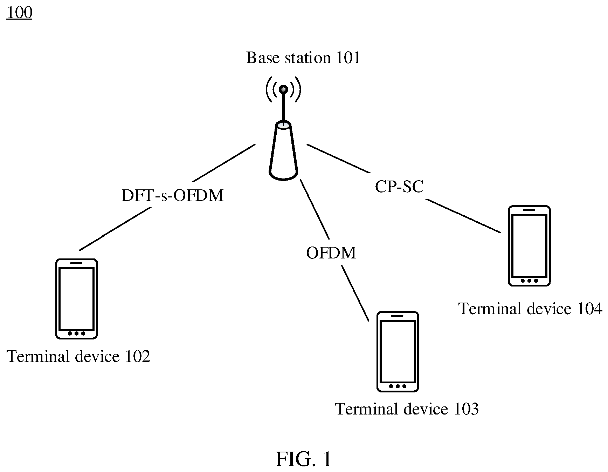

FIG. 1 is a diagram of a wireless communication system 100 to which an embodiment of this application is applicable. As shown in FIG. 1, in a process of communicating with a base station 101, a terminal device 102 uses a DFT-s-OFDM multi-carrier waveform, a terminal device 103 uses an OFDM multi-carrier waveform, and a terminal device 104 uses a CP-SC single-carrier waveform.

In an OFDM waveform, a high-speed data stream can be converted into a plurality of parallel low-speed data streams through serial/parallel conversion, and then the plurality of parallel low-speed data streams are allocated to subchannels on several subcarriers of different frequencies for transmission, thereby improving spectrum utilization. However, OFDM has a high PAPR.

The DFT-s-OFDM multi-carrier waveform uses a transmitter structure of OFDM to precode data before subcarrier mapping. After precoding, DFT-s-OFDM can obtain a lower PAPR than OFDM, but is also more complex.

The CP-SC single-carrier waveform indicates to add a CP when a transmit end generates a single-carrier waveform, to resist multipath interference. The single-carrier waveform has advantages of a low PAPR and low transmitter complexity. However, the single-carrier waveform cannot share a receiver with a conventional multi-carrier waveform, for example, OFDM. Consequently, communication efficiency is low.

An embodiment of this application provides a wireless communication method, so that in a wireless communication system in which single-carrier and multi-carrier waveforms coexist, a single-carrier waveform can share a receiver with a conventional multi-carrier waveform, for example, OFDM; and advantages of a low PAPR and low signal generation complexity due to transmission of a single-carrier signal at a transmitter are also achieved.

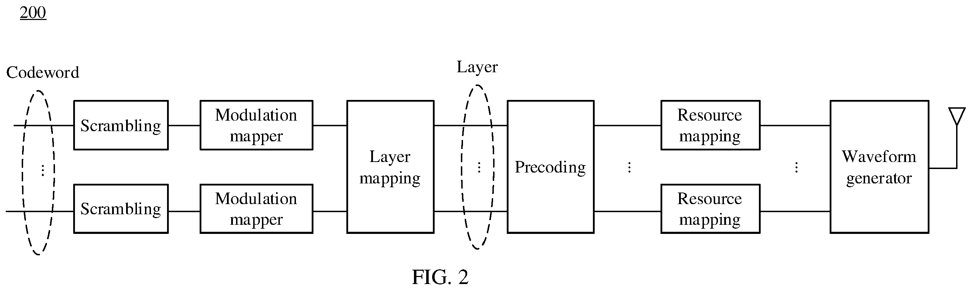

FIG. 2 is a schematic flowchart of a modem module 200. Content in this embodiment of this application mainly pertains to a waveform generator part in FIG. 2.

A function of the waveform generator is to generate a modulated waveform used for signal transmission. According to different modulation manners, the waveform generator may generate different modulated waveforms, and the generated modulated waveforms are used to load signals onto carriers for transmission in a channel.

SC-QAM and SC-FDE are conventional single-carrier waveforms. The single-carrier waveform has advantages of a lower PAPR and lower transmitter complexity. For high-frequency and large-bandwidth scenarios, SC-QAM or SC-FDE has greater advantages. However, SC-QAM and SC-FDE are incompatible with existing NR protocols. Moreover, in conventional systems, coexistence of single-carrier and multi-carrier waveforms is not well supported, and separate receivers need to be designed for the two types of waveforms to receive respective signals, resulting in excessively high costs. Therefore, an embodiment of this application provides a method for generating a single-carrier waveform, to resolve this problem.

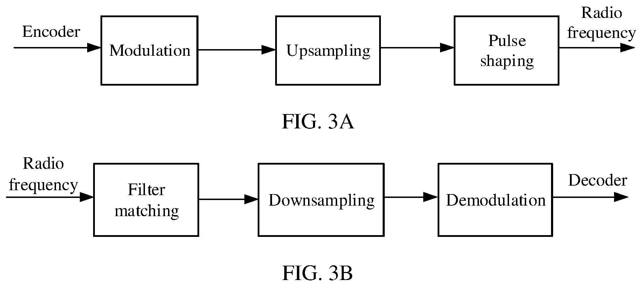

FIG. 3A and FIG. 3B are diagrams of processing procedures of a transmitter and a receiver of SC-QAM. FIG. 3A is a diagram of a processing procedure of the transmitter of SC-QAM, and FIG. 3B is a diagram of a processing procedure of the receiver of SC-QAM.

As shown in FIG. 3A and FIG. 3B, sending and receiving of SC-QAM are both completed in time domain, and time-frequency domain transform is not involved. Only time domain matched filtering and upsampling and downsampling are required. Therefore, compared with a multi-carrier waveform, SC-QAM has advantages of low complexity of a generation process and a low PAPR.

It should be understood that time-frequency domain transformation may include operations such as FFT, inverse fast Fourier transform (inverse fast Fourier transform, IFFT), discrete Fourier transform (discrete Fourier transform, DFT), and inverse discrete Fourier transform (inverse discrete Fourier transform, IDFT).

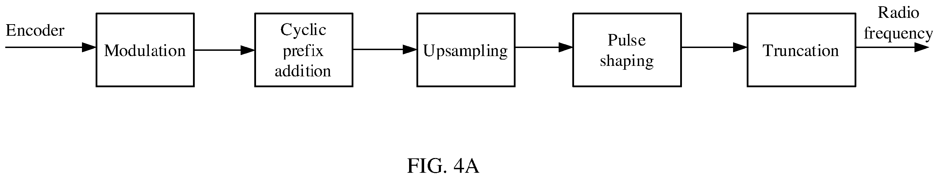

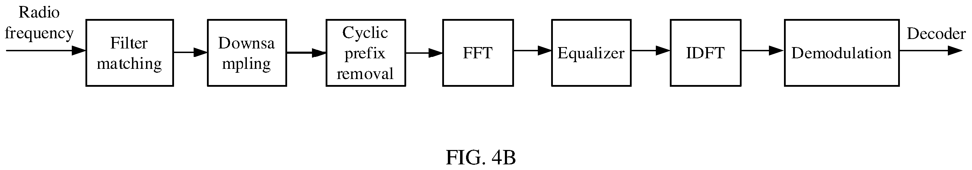

FIG. 4A and FIG. 4B are diagrams of processing procedures of a transmitter and a receiver of SC-FDE. FIG. 4A is a diagram of a processing procedure of an SC-FDE transmitter, and FIG. 4B is a diagram of a processing procedure of an SC-FDE receiver.

Different from conventional SC-QAM, for SC-FDE, a transmit end uses a method of adding a CP to resist multipath interference, and a receive end performs signal processing in frequency domain. Therefore, time-frequency domain transformation needs to be performed on a signal. For example, FFT is performed on a received signal to obtain a frequency domain signal for channel estimation and equalization, and after channel effects are eliminated, the signal is converted to time domain, to obtain a constellation symbol. With the SC-FDE method, a single carrier system can obtain a capability of simultaneously processing multiple pieces of data like a multi-carrier system, while overcoming an impact of a multi-path channel on system performance.

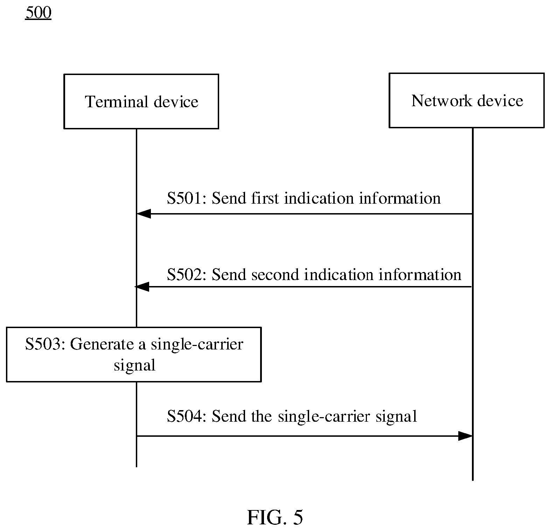

FIG. 5 is a schematic flowchart of a communication method 500 according to an embodiment of this application.

S501: Send first indication information.

Specifically, the first indication information indicates a terminal device to generate a single-carrier signal by using the method in this embodiment of this application.

Specifically, the first indication information is RRC signaling information or DCI signaling information. This is not limited in embodiments of this application.

Optionally, the first indication information indicates that transform precoding is enabled.

Optionally, the first indication information may be predefined in a protocol, and may be referred to as a switch or a flag. A specific name and form of the first indication information is not limited in embodiments of this application.

S502: Send second indication information.

Specifically, the second indication information is used to configure a parameter for generating the single-carrier signal.

Optionally, the second indication information may perform indication in the following manner.

### Manner 1

The second indication information explicitly indicates a parameter set, so that the terminal device generates a single-carrier signal in a pure time-domain processing manner.

Optionally, a configuration method for the parameter set may include at least one of the following.
(1) The parameter set is configured by a network device.

This embodiment of this application provides a parameter set. Each parameter set includes one or more of the following parameters: a configuration index, a quantity of PRBs, a quantity of REs, a system bandwidth, a roll-off factor, a quantity of FFT points, a CP length, a CP length in a symbol, a symbol rate Rs, an upsampling factor K, and a downsampling factor L. Details are shown in Table 1.

**Table 1 Example table of a parameter set**

| Configuration index | Quantity of PRBs | Quantity of REs | System bandwidth | Roll-off factor | Quantity of FFT points | System CP length | CP length in a symbol | Symbol rate Rs | Upsampling factor K | Downsampling factor L |
|---|---|---|---|---|---|---|---|---|---|---|
| 0 | 256 | 3072 | 273*12 | 1 | 4096 | 288 | 216 | 3288 | 4 | 3 |
| 1 | 256 | 3072 | 273*12 | 1 | 8192 | 576 | 216 | 3288 | 8 | 3 |
| 2 | 512 | 6144 | 546*12 | 1 | 8192 | 576 | 432 | 6576 | 4 | 3 |
| 3 | 341 | 4092 | 4096 | 1 | 4096 | 288 | 288 | 4384 | 1 | 1 |
| 4 | 682 | 8184 | 8192 | 1 | 8192 | 576 | 576 | 8768 | 1 | 1 |
| 5 | / | 4096 | 4096 | 1 | 4096 | 288 | 288 | 4384 | 1 | 1 |
| 6 | / | 8192 | 8192 | 1 | 8192 | 576 | 576 | 8768 | 1 | 1 |

The CP length in a symbol is a CP length that needs to be added based on a baseband sampling rate (or a symbol rate determined by using a scheduled bandwidth, or a symbol rate determined by using a to-be-sent symbol). A specific value of the CP length in a symbol, after upsampling, downsampling, or Fourier transform, is equal to a system CP length corresponding to a given subcarrier spacing and bandwidth (or quantity of FFT points).

The symbol rate Rs is a quantity of modulation symbols in a unit time (for example, in an OFDM symbol time or a symbol time of a system).

The seven parameter sets provided in Table 1 are examples, and should not be construed as limiting to only seven parameter sets. "/" indicates that an item in a parameter set to which the item belongs may be left blank.

Optionally, when the network device performs DCI scheduling or RRC preconfiguration, the configuration index of the parameter set may be used to indicate the parameter sets in Table 1.

Optionally, the network device may directly indicate the parameter set. In other words, the parameter set is not indicated by using the configuration index.

Optionally, the parameter set may further include frequency domain resource allocation (frequency domain resource allocation, FDRA). The network device defines an FDRA value to indicate the quantity of FFT points, a scheduling bandwidth, or a quantity of scheduled to-be-transmitted symbols. In other words:
(1) the FDRA value is used to determine the quantity of FFT points; or
(2) the FDRA value is used to determine the quantity of PRBs; or
(3) the FDRA value is used to determine the quantity of REs.

Optionally, if the quantity of PRBs indicated by the network device through FDRA scheduling is greater than or equal to a maximum quantity of PRBs in a current system, the terminal device determines the quantity of FFT points accordingly.

For example, the quantity of FFT points is a minimum quantity of FFT points that is greater than a total quantity of REs.

(2) The parameter set may alternatively be predefined in a protocol.

### Manner 2

The second indication information implicitly indicates, by scheduling a special bandwidth resource, the terminal device to generate the single-carrier signal in a pure time-domain processing manner.

Optionally, the network device indicates the terminal device to send a signal in a DFT-s-OFDM manner, and indication is performed by indicating a specific parameter. In other words, when the network device indicates a specific parameter, the terminal device generates a single-carrier signal by using the method according to this embodiment of this application.

For example, the specific parameter is a bandwidth resource allocated by the network device to the terminal device for transmission, for example, indicating that the quantity of PRBs is 341.

Optionally, a value of the transmission bandwidth is predefined in a protocol.

Optionally, in this manner, the terminal device considers that both the upsampling factor and the downsampling factor are 1 by default.

For example, when Formula (1) is satisfied, the terminal device considers that both the upsampling factor and the downsampling factor are 1 by default: $\left⌊\frac{FFTsize}{12}\right⌋ = scheduledPRBnumber$ (1)

*FFTsize* represents a quantity of FFT points of the system, and the terminal device may determine *FFTsize* based on the system bandwidth or a quantity of subcarriers; and *scheduledPRBnumber* represents a quantity of scheduled PRBs.

### └ ┘ represents rounding down.

Optionally, in this manner, a parameter of a filter, for example, a quantity of taps of a time-domain filter or a response array of a time-domain filter, may be configured by the network device, or may be configured by the terminal device based on a capability of the terminal device.

Optionally, in this manner, a parameter required for generating the single-carrier signal may be configured by the network device.

Optionally, in this manner, a parameter required for generating the single-carrier signal may be predefined in a protocol.

Optionally, in this manner, a parameter required for generating the single-carrier signal may be determined by the terminal device.

For example, the terminal device determines the CP length in a symbol based on parameters such as the upsampling factor, the downsampling factor, and the bandwidth resource allocated by the network device to the terminal device for transmission.

S503: Generate the single-carrier signal.

Optionally, the terminal device receives the first indication information and the second indication information, and generates a single-carrier signal based on the parameter set specified by the network device and the method according to this embodiment of this application.

Optionally, the terminal device, based on the first indication information and in combination with the special bandwidth resource scheduled by using the second indication information, generates a single-carrier signal by using the method according to this embodiment of this application.

S504: Send the single-carrier signal.

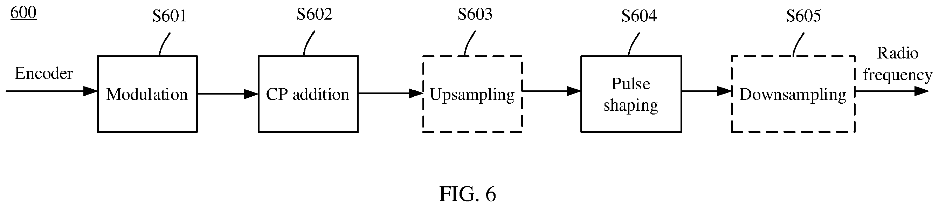

FIG. 6 is a flowchart of a method 600 for generating a single-carrier signal according to an embodiment of this application. Specific steps of the method 600 are as follows.

### S601: Modulation phase

Optionally, if a to-be-sent bit stream is a DMRS sequence, Fourier transform needs to be performed on the DMRS sequence before a step in S601.

Optionally, if the to-be-sent bit stream is a pure time-domain DMRS sequence predefined in a protocol, S601 is directly performed.

Optionally, the to-be-sent bit stream is a DMRS sequence predefined in a protocol, and the DMRS sequence uses a specific sequence or mapping manner, so that the DMRS sequence can be used to generate a single-carrier signal by using the method in this embodiment of this application. A specific sequence type and mapping manner are not limited in embodiments of this application.

For example, the DMRS sequence predefined in a protocol is a Golay sequence or a Golay complementary sequence.

For example, a protocol predefines a DMRS sequence, and the DMRS sequence may be directly used to generate a single-carrier signal by using the method in this embodiment of this application, without performing Fourier transform.

Optionally, the to-be-sent bit stream may alternatively be another type of sequence, provided that a subsequent operation may be performed on the to-be-sent bit stream in a pure time-domain processing manner. This is not limited in embodiments of this application.

Specifically, a to-be-sent bit stream obtained through an encoder enters the modulation phase, pure real-valued modulation is adopted for the to-be-sent bit stream. Then, filtering is performed on a modulated signal, and ±π/2 phase rotation (when a positive value is used, a phase is rotated leftward; and when a negative value is used, a phase is rotated rightward) is performed on the signal obtained after filtering. Filtering of a symbol may be performed on a symbol at an odd position or a symbol at an even position. For example, phase rotation is performed on the symbol at an odd position, which may be represented by Formula (2): $d \left(i\right) = s \left(i\right) ∗ {e}^{\pm j \frac{π}{2} \left(imod2\right)}$ (2)

*s* may be a pulse amplitude modulation (pulse amplitude modulation, PAM) symbol or a binary phase shift keying (binary phase shift keying, BPSK) modulation symbol; *i* represents an index of a modulation symbol; mod represents a modulo operation; and *d*(*i*) represents an output modulation symbol.

Optionally, a specific modulation process may be in one of the following manners:

### Manner 1

First, to-be-modulated information bits are modulated by using BPSK, and then phase rotation is performed on a modulated signal. For example, π/2-BPSK modulation is adopted and phase rotation is performed on the symbol at an odd position. The modulation process is represented by Formula (3): $d \left(i\right) = \frac{{e}^{\pm j \frac{π}{2} \left(imod2\right)}}{\sqrt{2}} \left[\left(1-2b\left(i\right)\right)+j\left(1-2b\left(i\right)\right)\right]$ (3)

*b*(*i*) represents a to-be-modulated bit; *d*(*i*) represents an output modulation symbol; and mod represents a modulo operation.

### Manner 2

First, the to-be-modulated information bits are modulated by using pulse amplitude modulation (pulse amplitude modulation, PAM), including 4-PAM, 8-PAM, or 16-PAM. Then, filtering is performed on a modulated signal, and ±π/2 phase rotation is performed on the signal obtained after filtering. Filtering of a symbol may be performed on a symbol at an odd position or a symbol at an even position. 4-PAM modulation is used as an example. The specific process is as follows:

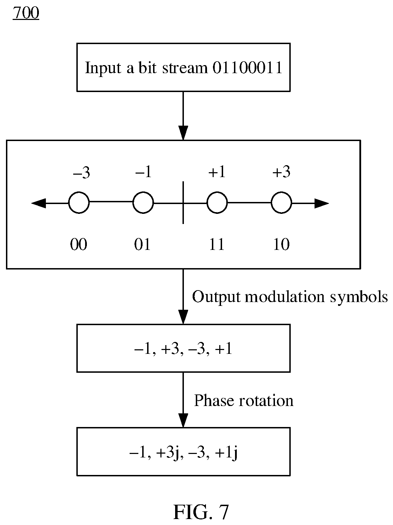

FIG. 7 is an example diagram of a modulation method 700 according to an embodiment of this application.

As shown in FIG. 7, 4-PAM modulation is used as an example, and the modulation process of performing π/2 phase rotation on the symbol at an even position is as follows.

A modulation principle of 4-PAM is to divide a digital signal into four levels, and each level represents two bits. As shown in FIG. 7, "00" is mapped to "-3", "01" is mapped to "-1", "11" is mapped to "+1", and "10" is mapped to "+3". When to-be-sent information bits are "01100011", modulation symbols "-1, +3, -3, +1" are output, and then π/2 phase rotation is performed on symbols at an even position. In this way, modulation symbols "-1, +3j, -3, +1j" are obtained.

Optionally, the modulation manner used in S601 is determined based on a scheduling indication of the network device.

### S602: CP addition phase

Specifically, the modulated data symbols are obtained based on S601, and a CP is added to the data symbols.

Optionally, a length of the CP that needs to be added to the data symbols is configured by the network device, as shown in Table 1.

Optionally, the length of the CP that needs to be added to the data symbols is determined by the terminal device based on parameters such as the bandwidth resource configured by the network device for transmission.

For example, the terminal device determines the CP length in a symbol based on parameters such as the upsampling factor, the downsampling factor, the system bandwidth, and the symbol rate Rs.

The network device calculates the length of the CP that needs to be added to the data symbols. A specific calculation manner is represented by Formula (4): $\begin{matrix}CP length in a symbol = System CP length corresponding \\ to a current quantity of FFT points * L / K\end{matrix}$ (4)

K represents the upsampling factor, L represents the downsampling factor, and K and L are positive integers.

For example, for the parameter set 0 shown in Table 1, the quantity of FFT points is 4096, the system CP length is 288, the upsampling factor is 4, and the downsampling factor is 3. In this case, the CP length in a symbol is 216.

Optionally, when the parameter set shown in Table 1 does not include the CP length in the data symbols, the terminal device may determine the CP length in a symbol according to Formula (4).

Optionally, the system CP length corresponding to the current quantity of FFT points is configured by the network device. When the system performs configuration, the system CP length corresponding to the current quantity of FFT points is any one of {144*k, k=1, 2, 3, ...}, where k is a positive integer.

Optionally, the upsampling factor and the downsampling factor are configured by the network device.

Optionally, the system CP length corresponding to the current number of FFT points is predefined in a protocol.

Optionally, the upsampling factor and the downsampling factor are predefined in a protocol.

Optionally, a manner of obtaining the quantity of FFT points may further include the following manners.

### (1) Inferred based on a bandwidth of a current serving cell

For example, a condition is set as: Total quantity of RBs in the current serving cell*12*SCS<Quantity of FFT points*SCS. In this case, the quantity of FFT points is a minimum quantity of FFT points in {2048*k, k=1,2,3,...} that satisfies the condition.

RB is a resource block, is a frequency domain resource unit predefined in a protocol, and includes 12 REs, where each RE is a subcarrier in an OFDM waveform; SCS represents a subcarrier spacing; and k is a positive integer.

It should be understood that, unless specially emphasized, in embodiments of this application, the RB and the PRB have a same meaning when the RB and PRB are both used to represent a frequency domain resource unit including 12 subcarriers in frequency domain, and the RB and the PRB may be used interchangeably without causing ambiguity.

### (2) Configured by the network device

The network device configures the parameter set by using higher layer signaling. For example, the quantity of FFT points configured by using RRC signaling is any one of {2048*k, k=1, 2, 3, ...}.

Optionally, when the quantity of PRBs is a specific transmission bandwidth, for example, the quantity of PRBs is 341 or 682, and both the upsampling factor and the downsampling factor are 1, a padding (padding) operation needs to be performed on the data symbols before step S602.

Optionally, 0 or a random modulation symbol is added to the data symbols, or a modulation symbol carrying to-be-sent information is added to the data symbols. A specific form of an added modulation symbol is not limited in embodiments of this application.

For example, for the parameter set 3 in Table 1, the quantity of PRBs is 341, and both the upsampling factor and the downsampling factor are 1. A padding operation needs to be performed on the data symbols, to pad a data length, so that a size of the data symbols is equal to the quantity of FFT points. That is, 341 RBs*12=4092. In this case, four data symbols need to be added, so that the length is 4096.

Similarly, a padding operation also needs to be performed on the parameter set 4.

### S603: Upsampling phase

Specifically, a data stream obtained after CP addition is upsampled based on the parameter configured by the network device, as shown in Table 1, where the upsampling factor K is an integer greater than or equal to 1.

It should be understood that when K=1, S603 is an optional step.

### S604: Pulse shaping phase

Specifically, a filter with a roll-off factor *β* is used to perform filtering on a data stream obtained after upsampling.

Optionally, a value of *β* may be determined by the terminal device in the following manners.
(1) Determined based on the parameter set configured by the network device, as shown in Table 1
(2) Implicitly indicated by using a scheduled special resource

For example, when the quantity of PRBs is a specific value predefined in a protocol, the value of *β* is 1 by default.

Optionally, in this manner, a parameter of a filter, for example, a quantity of taps of a time-domain filter or a response array of a time-domain filter, may be configured by the network device, or may be configured by the terminal device based on a capability of the terminal device.

### (3) Determined based on the scheduling bandwidth

For example, when the system bandwidth is given, and a maximum quantity of modulation symbols can be sent within one system symbol duration, the value of *β* is 1 by default.

### (4) Implicitly indicated based on modulation

Specifically, an order or a modulation and coding scheme (modulation and coding scheme, MCS) indicated by the network device is used for determining.

Optionally, when pure real-valued modulation and π/2 phase rotation are performed on the to-be-sent bit stream, the value of *β* is 1 by default.

Optionally, based on modulation, the roll-off factor *β* is set to a default value, and a specific modulation manner is not limited.

For example, the default value of the roll-off factor *β* is 1.

It should be understood that, in frequency domain, the value of the roll-off factor *β* is 1. For example, an original to-be-transmitted data signal occupies a bandwidth B, and after being filtered by a filter with a roll-off factor of 1, an occupied bandwidth is 2B.

Optionally, the value of the roll-off factor may be determined by the network device in the following manners.

A relationship between the roll-off factor and the bandwidth satisfies Formula (5): $BW = \frac{{R}_{s}}{2} \left(β+1\right)$ (5)

*BW* represents the bandwidth (the quantity of subcarriers), *Rs* represents the symbol rate (the quantity of modulation symbols transmitted in a unit time), and *β* represents the roll-off factor.

That is, the roll-off factor shown in Table 1 may be determined based on at least one of the following:
(1) determined based on the quantity of PRBs and the symbol rate in the parameter set;
(2) determined based on the quantity of REs and the symbol rate in the parameter set;
(3) determined based on the system bandwidth and the symbol rate in the parameter set;
(4) configured by the network device by using RRC or by using DCI, where a specific configuration manner is not limited in embodiments of this application; or
(5) predefined by the protocol.

Optionally, when the parameter configured by the network device for the terminal device does not include the roll-off factor, the terminal device determines the roll-off factor according to Formula (5). In other words, the terminal device determines the roll-off factor based on at least one of the following:
(1) determining based on the quantity of PRBs and the symbol rate in the parameter set;
(2) determining based on the quantity of REs and the symbol rate in the parameter set; or
(3) determining based on the system bandwidth and the symbol rate in the parameter set.

Optionally, the network device generates a parameter of a filter based on the roll-off factor by using a predefined filter shaping formula. An RRC filter is used as an example. A filter shaping formula of the RRC filter is shown in Formula (6): $h \left(t\right) = \left\{\begin{matrix}\frac{1}{{T}_{s}} \left(1+β\left(\frac{4}{π}-1\right)\right) , & t = 0 \\ \frac{β}{{T}_{s} \sqrt{2}} \left[\left(1+\frac{2}{π}\right)sin\left(\frac{π}{4 β}\right)+\left(1-\frac{2}{π}\right)cos\left(\frac{π}{4 β}\right)\right] , & t = \pm \frac{{T}_{s}}{4 β} \\ \frac{1}{{T}_{s}} \frac{sin \left[π\frac{t}{{T}_{s}}\left(1-β\right)\right] + 4 β \frac{t}{{T}_{s}} cos \left[π\frac{t}{{T}_{s}}\left(1+β\right)\right]}{π \frac{t}{{T}_{s}} \left[1-{\left(4β\frac{t}{{T}_{s}}\right)}^{2}\right]} , & otherwise\end{matrix}\right.$ (6)

Ts represents the symbol rate, and *β* represents the roll-off factor.

It should be understood that the filter function shown in Formula (6) is a representation of a continuous-time signal. During actual engineering application, the function needs to be sampled for discretization, to obtain an array of a finite length, and then a filter obtained after discrete sampling, namely, the array of a finite length, is used for a linear convolution operation.

It should be understood that, using the RRC filter to generate the parameter of the filter is merely an example for description, and another filter such as a Kaiser window filter may be alternatively included. This is not limited in embodiments of this application. However, a shape and a parameter of a selected filter need to be determined based on the roll-off factor.

Optionally, the parameter of the filter may be alternatively configured based on a capability reported by the terminal device.

Optionally, the parameter set shown in Table 1 may further include the parameter of the filter. In other words, the network device directly configures the parameter of the filter for the terminal device.

Optionally, the parameter of the filter may be further predefined in a protocol.

Optionally, in a truncation phase, data obtained after filtering is truncated: It is assumed that M represents a length of data obtained after upsampling in S603. In this case, a data length after filtering is M+Ntaps-1, and first M pieces of data are selected, where M is a positive integer.

Optionally, last M pieces of data may alternatively be selected in the truncation phase.

Optionally, in the truncation phase, the protocol does not specify how the terminal performs truncation on data obtained after convolution, and the terminal device determines a truncation manner.

Ntaps represents the parameter of the filter, namely, a quantity of taps of a time-domain filter.

### S605: Downsampling phase

Specifically, the data obtained after filtering is downsampled based on the parameter configured by the network device, as shown in Table 1, where the downsampling factor L is an integer greater than or equal to 1.

It should be understood that when L=1, S605 is an optional step.

Data obtained after the downsampling phase is converted into a radio frequency signal for transmission.

It should be understood that after the single-carrier signal sent by using the method according to this embodiment of this application arrives at a receiver, a receive end needs to perform time-frequency domain transformation when performing signal processing on the single-carrier signal. A specific time-frequency domain transformation implementation is not limited in this application.

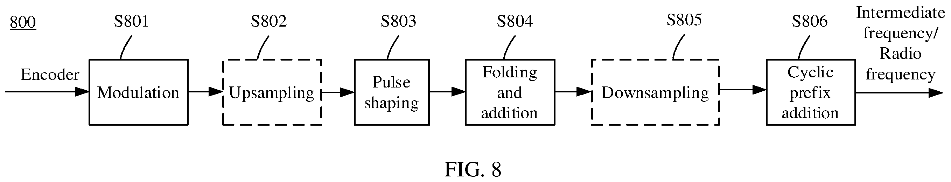

FIG. 8 is a flowchart of a method 800 for generating a single-carrier signal according to an embodiment of this application.

### S801: Modulation phase

For a specific process, refer to the step in S601. Details are not described herein again.

Optionally, if a to-be-sent bit stream is a DMRS sequence, Fourier transform needs to be performed on the DMRS sequence before a step in S801.

Optionally, if the to-be-sent bit stream is a pure time-domain DMRS sequence predefined in a protocol, S801 is directly performed.

Optionally, the to-be-sent bit stream is a DMRS sequence predefined in a protocol, and the DMRS sequence uses a specific sequence or mapping manner, so that the DMRS sequence can be used to generate a single-carrier signal by using the method in this embodiment of this application. A specific sequence type and mapping manner are not limited in embodiments of this application.

For example, the DMRS sequence predefined in a protocol is a Golay sequence or a Golay complementary sequence.

For example, a protocol predefines a DMRS sequence, and the DMRS sequence may be directly used to generate a single-carrier signal by using the method in this embodiment of this application, without performing Fourier transform.

Optionally, the to-be-sent bit stream may alternatively be another type of sequence, provided that a subsequent operation may be performed on the to-be-sent bit stream in a pure time-domain processing manner. This is not limited in embodiments of this application.

### S802: Upsampling phase

Specifically, a data stream obtained after modulation is upsampled based on the parameter configured by the network device, as shown in Table 1, where the upsampling factor K is an integer greater than or equal to 1.

It should be understood that when K=1, this step may be omitted.

### S803: Pulse shaping phase

For a specific process, refer to the step in S604. Details are not described herein again.

### S804: Folding and addition phase

Specifically, data obtained after filtering enters the folding and addition phase. Last Ntaps-1 pieces of data of the data stream are added to first Ntaps-1 pieces of data of the data stream.

Ntaps represents the parameter of the filter, namely, a quantity of taps of a time-domain filter.

Optionally, the parameter set shown in Table 1 may further include the parameter of the filter. In other words, the network device directly configures the parameter of the filter for the terminal device.

Optionally, the parameter of the filter may be further predefined in a protocol.

### S805: Downsampling phase

Specifically, the data obtained after folding and addition is downsampled based on the parameter configured by the network device, as shown in Table 1, where the downsampling factor L is an integer greater than or equal to 1.

It should be understood that when L=1, this step may be omitted.

### S806: CP addition phase

A specific step is described in S602. Details are not described herein again.

Data obtained after S806 is converted into an intermediate frequency signal or a radio frequency signal for transmission.

It should be understood that after the single-carrier signal sent by using the method according to this embodiment of this application arrives at a receiver, a receive end needs to perform time-frequency domain transformation when performing signal processing on the single-carrier signal. A specific time-frequency domain transformation implementation is not limited in this application.

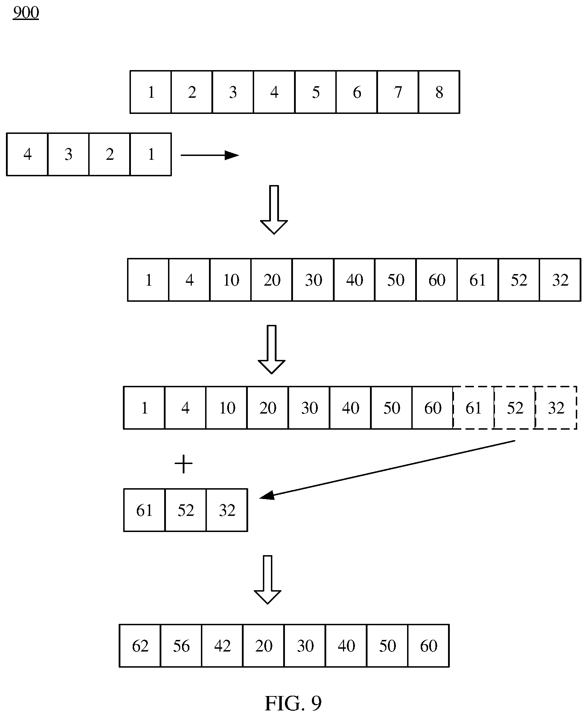

FIG. 9 is an example diagram of a convolution principle 900 applied to a method according to an embodiment of this application.

As shown in FIG. 9, a to-be-filtered data stream is "1, 2, 3, 4, 5, 6, 7, 8", and a data stream "4, 3, 2, 1" is used to perform convolution on the to-be-filtered data stream, to obtain a filtered data stream "1, 4, 10, 20, 30, 40, 50, 60, 61, 52, 32"; and Ntaps is set to 4, and last three pieces of data of the filtered data stream are added to first three pieces of data of the data stream, to obtain a data stream "62, 56, 42, 20, 30, 40, 50, 60".

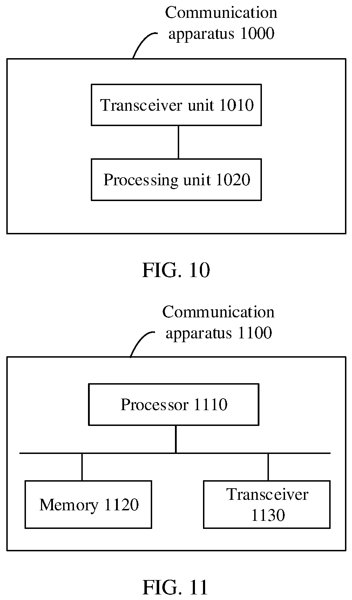

FIG. 10 is a block diagram of a communication apparatus 1000 according to an embodiment of this application. The apparatus 1000 includes a transceiver unit 1010 and a processing unit 1020. The transceiver unit 1010 may communicate with the outside, and the processing unit 1020 is configured to process data. The transceiver unit 1010 may also be referred to as a communication interface or a communication unit.

Optionally, the transceiver unit 1010 may also be referred to as a communication interface or a communication unit, and includes a sending unit and/or a receiving unit. The transceiver unit 1010 may be a transceiver (including a transmitter and/or a receiver), an input/output interface (including an input interface and/or an output interface), a pin, a circuit, or the like. The transceiver unit 1010 may be configured to perform a sending step and/or a receiving step in the foregoing method embodiments.

Optionally, the processing unit 1020 may be a processor (may include one or more processors), a processing circuit with a processor function, or the like, and may be configured to perform a step other than sending and receiving in the foregoing method embodiments.

Optionally, the apparatus 1000 further includes a storage unit. The storage unit may be a memory, an internal storage unit (for example, a register or a cache), an external storage unit (for example, a read-only memory or a random access memory), or the like. The storage unit is configured to store instructions. The processing unit 1020 executes the instructions stored in the storage unit, so that the communication apparatus performs the foregoing methods.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

In addition, the transceiver unit 1010 may alternatively be a transceiver circuit (for example, may include a receiving circuit and a sending circuit), and the processing unit may be a processing circuit.

It should be noted that the apparatus in FIG. 10 may alternatively be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

The apparatus 1000 may be configured to perform an action performed by the network device in the foregoing method embodiments. In this case, the apparatus 1000 may be the network device or a component that can be configured in the network device. The transceiver unit 1010 is configured to perform an operation related to receiving and sending on a network device side in the foregoing method embodiments. The processing unit 1020 is configured to perform an operation related to processing on the network device side in the foregoing method embodiments.

Alternatively, the apparatus 1000 may be configured to perform an action performed by the terminal device in the foregoing method embodiments. In this case, the apparatus 1000 may be the terminal device or a component that can be configured in the terminal device. The transceiver unit 1010 is configured to perform an operation related to receiving and sending on a terminal device side in the foregoing method embodiments. The processing unit 1020 is configured to perform an operation related to processing on the terminal device side in the foregoing method embodiments.

FIG. 11 is a diagram of a communication apparatus according to an embodiment of this application. The communication apparatus 1100 shown in FIG. 11 includes a processor 1110, a memory 1120, and a transceiver 1130. The processor 1110 is coupled to the memory 1120, and is configured to execute instructions stored in the memory 1120, to control the transceiver 1130 to send a signal and/or receive a signal.

It should be understood that the processor 1110 and the memory 1120 may be combined into one processing apparatus, and the processor 1110 is configured to execute program code stored in the memory 1120 to implement the foregoing functions. During specific implementation, the memory 1120 may alternatively be integrated into the processor 1110, or may be independent of the processor 1110. It should be understood that, the processor 1110 may correspond to each processing unit in the foregoing communication apparatus, and the transceiver 1130 may correspond to each receiving unit and sending unit in the foregoing communication apparatus.

It should be further understood that, the transceiver 1130 may include a receiver (or referred to as a receiver machine) and a transmitter (or referred to as a transmitter machine). The transceiver may further include an antenna. There may be one or more antennas. The transceiver may alternatively be a communication interface or an interface circuit.

It should be understood that, when the communication apparatus 1100 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods may be completed by using an integrated logic circuit of hardware in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, all or some of the procedure or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, wherein the method comprises:
generating a single-carrier signal based on a parameter set and a to-be-sent bit stream, wherein the parameter set comprises one or more of the following: a configuration index, a quantity of physical resource blocks PRBs, a quantity of resource elements REs, a system bandwidth, a roll-off factor, a quantity of fast Fourier transform FFT points, a system cyclic prefix CP length, a CP length in a symbol, a symbol rate, an upsampling factor, and a downsampling factor; and
sending the single-carrier signal.

2. The method according to claim 1, wherein generating the single-carrier signal based on the parameter set and the to-be-sent bit stream comprises:
modulating the to-be-sent bit stream to obtain a first signal; adding a CP to the first signal based on the CP length in a symbol to obtain a second signal; upsampling the second signal based on the upsampling factor to obtain a third signal; performing pulse shaping on the third signal based on the roll-off factor to obtain a fourth signal; and downsampling the fourth signal based on the downsampling factor to obtain the single-carrier signal.

3. The method according to claim 1, wherein generating the single-carrier signal based on the parameter set and the to-be-sent bit stream comprises:
modulating the to-be-sent bit stream to obtain a first signal; upsampling the first signal based on the upsampling factor to obtain a second signal; performing pulse shaping on the second signal based on the roll-off factor to obtain a third signal; performing folding and addition on the third signal to obtain a fourth signal; downsampling the fourth signal based on the downsampling factor to obtain a fifth signal; and adding a CP to the fifth signal based on the CP length in a symbol to obtain the single-carrier signal.

4. The method according to claim 2 or 3, wherein modulating the to-be-sent bit stream to obtain the first signal comprises adopting pure real-valued modulation and π/2 phase rotation for the to-be-sent bit stream.

5. The method according to claim 4, wherein adopting the pure real-valued modulation and the π/2 phase rotation on the to-be-sent bit stream comprises determining the roll-off factor as 1 based on the modulation.

6. The method according to any one of claims 1 to 5, comprising:
determining the roll-off factor based on the quantity of PRBs and the symbol rate; or
determining the roll-off factor based on the quantity of REs and the symbol rate; or
determining the roll-off factor based on the system bandwidth and the symbol rate.

7. The method according to any one of claims 2 to 6, wherein the parameter set further comprises a parameter of a filter, and the parameter of the filter is used to perform the pulse shaping.

8. The method according to any one of claims 1 to 7, comprising:
determining the length of the CP in a symbol based on the quantity of FFT points, the system CP length, the upsampling factor, and the downsampling factor.

9. The method according to any one of claims 1 to 8, wherein
the parameter set further comprising frequency domain resource allocation FDRA; and the method further comprises:
determining the quantity of FFT points based on the FDRA; or
determining the quantity of PRBs based on the FDRA; or
determining the quantity of REs based on the FDRA.

10. The method according to claim 2, wherein the quantity of PRBs is a transmission bandwidth predefined in a protocol, and the transmission bandwidth indicates to perform padding and CP addition on the first signal to obtain the second signal.

11. The method according to claim 3, wherein the quantity of PRBs is a transmission bandwidth predefined in a protocol, and the transmission bandwidth indicates to perform padding and CP addition on the fifth signal to obtain the single-carrier signal.

12. The method according to claim 10 or 11, wherein that the quantity of PRBs is the transmission bandwidth predefined in the protocol comprises: both the upsampling factor and the downsampling factor are 1.

13. The method according to any one of claims 1 to 12, wherein
the parameter set is configured by an access network device; or
the parameter set is predefined in a protocol.

14. A wireless communication method, wherein the method comprises:
sending first indication information, wherein the first indication information indicates a terminal device to generate a single-carrier signal based on a parameter set and a to-be-sent bit stream;
sending second indication information, wherein the second indication information indicates a parameter for generating the single-carrier signal; and
receiving the single-carrier signal by using a multi-carrier receiver, wherein the single-carrier signal is generated based on the first indication information and the second indication information.

15. The method according to claim 14, wherein the second indication information comprises a parameter set, and the parameter set comprises one or more of the following: a configuration index, a quantity of PRBs, a quantity of REs, a system bandwidth, a roll-off factor, a quantity of FFT points, a system CP length; a CP length in a symbol, a symbol rate, an upsampling factor, and a downsampling factor; and
the single-carrier signal is generated based on the parameter set.

16. The method according to claim 15, comprising:
determining the length of the CP in a symbol based on the quantity of FFT points, the system CP length, the upsampling factor, and the downsampling factor.

17. The method according to claim 15 or 16, wherein
the roll-off factor is determined based on the quantity of PRBs and the symbol rate; or
the roll-off factor is determined based on the quantity of REs and the symbol rate; or
the roll-off factor is determined based on the system bandwidth and the symbol rate; or
the roll-off factor is configured by an access network device; or
the roll-off factor is predefined in a protocol.

18. The method according to any one of claims 15 to 17, wherein the parameter set further comprises a parameter of a filter, and the parameter of the filter is determined based on the roll-off factor.

19. The method according to any one of claims 15 to 18, wherein the parameter set further comprises FDRA, and the FDRA is used to determine the quantity of FFT points.

20. The method according to claim 14, wherein the second indication information comprises a transmission bandwidth predefined in a protocol.

21. The method according to claim 20, wherein that the second indication information comprises the transmission bandwidth predefined by the protocol comprises: the transmission bandwidth predefined by the protocol is used to determine that both the upsampling factor and the downsampling factor are 1.

22. A communication apparatus, comprising a processing unit and a transceiver unit, wherein
the processing unit is configured to generate a single-carrier signal based on a parameter set and a to-be-sent bit stream; and
the transceiver unit is configured to send the single-carrier signal.

23. A communication apparatus, comprising a processing unit and a transceiver unit, wherein
the transceiver unit is configured to send first indication information, wherein the first indication information indicates a terminal device to generate a single-carrier signal based on a parameter set and a to-be-sent bit stream;
the transceiver unit is further configured to send second indication information, wherein the second indication information indicates a parameter for generating the single-carrier signal;
the transceiver unit is further configured to receive the single-carrier signal, wherein the single-carrier signal is generated based on the first indication information and the second indication information; and
the processing unit demodulates the single-carrier signal by using a multi-carrier receiver.

24. A communication apparatus, comprising a processor, wherein the processor is coupled to a memory, and the processor is configured to execute a computer program stored in the memory, to enable the apparatus to perform the method according to any one of claims 1 to 13, or enable the apparatus to perform the method according to any one of claims 14 to 21.

25. A communication system, comprising the communication apparatus according to claim 22 and/or the communication apparatus according to claim 23.

26. A computer-readable storage medium, wherein the computer-readable storage medium stores a computer program, and when the computer program is run on a computer, the computer is enabled to perform the method according to any one of claims 1 to 13, or the computer is enabled to perform the method according to any one of claims 14 to 21.

27. A chip system, comprising a processor, configured to invoke a computer program from a memory and run the computer program, to enable a communication device on which the chip system is installed to perform the method according to any one of claims 1 to 13, or enable a communication device on which the chip system is installed to perform the method according to any one of claims 14 to 21.

28. A computer program product, wherein the computer program product comprises instructions for performing the method according to any one of claims 1 to 13, or instructions for performing the method according to any one of claims 14 to 21.
